# EUROPÄISCHE PATENTSCHRIFT

(11) **EP 4 540 180 B1**
(45) Veröffentlichungstag und Bekanntmachung des Hinweises auf die Patenterteilung: **15.04.2026**
(21) Anmeldenummer: 23731301.0
(22) Anmeldetag: 13.06.2023
(51) Int. Cl.: C01D 3/08, C04B 7/43

(54) **VERFAHREN ZUR BEHANDLUNG VON SALZHALTIGEN STÄUBEN**
METHOD FOR THE TREATMENT OF SALT-CONTAINING DUSTS
PROCÉDÉ DE TRAITEMENT DES POUSSIÈRES SALINES

(30) Priorität: 20.06.2022 EP 22179873
(43) Veröffentlichungstag der Anmeldung: 23.04.2025
(73) Patentinhaber: amaTEQ Holding GmbH, 48143 Münster (DE)
(72) Erfinder: KEHRMANN, Alexander, 48149 Münster (DE); EDELKOTT, Detlef, 89584 Ehingen (DE)
(74) Vertreter: Hoffmann Eitle
(86) Internationale Anmeldenummer: PCT/EP2023/065729
(87) Internationale Veröffentlichungsnummer: WO 2023/247251

(56) Entgegenhaltungen:
- EP-A1- 2 975 009
- WO-A1-2012/142638
- WO-A1-2016/189374
- CN-A- 113 353 956
- US-A1- 2018 148 374

## Beschreibung

### Technisches Gebiet

Die vorliegende Erfindung betrifft ein Verfahren zur Behandlung von salzhaltigen Stäuben, die beim Betrieb industrieller Anlagen, z.B. in Müllverbrennungsanlagen oder beim Betrieb von Drehrohröfen, z.B. in Zementherstellungsanlagen oder Klinkerherstellungsanlagen, anfallen.

### Hintergrund

Bei dem Betrieb von industriellen Anlagen, fallen oftmals große Mengen an salzhaltigen Stäuben, deren Verwertung angesichts vorhersehbarer Rohstoffknappheit und zunehmender Nachhaltigkeitsbestrebungen eine immer größer werdende Beachtung findet. Selbst wenn eine Deponierung dieser Stoffe in Betracht gezogen wird, kann ihre Zusammensetzung großen Einfluss auf die damit verbundenen Kosten haben.

EP 2 975 009 A beschreibt ein Verfahren zur Behandlung und Verwertung von Bypassstäuben und Bypassgasen aus einer Industrieanlage, die einen oder mehrere Drehrohröfen umfasst.

CN 113 353 956 A beschreibt ein System und Verfahren zur Entsalzung von Flugasche durch Wasserwäsche und zur Mitverwertung in einem Zementofen. Das System umfasst im Wesentlichen eine Flugasche-Elutionsvorrichtung, eine Elutionsmittel-Reinigungsvorrichtung, eine Trocknungsvorrichtung, eine Verdampfungs-Salzgewinnungsvorrichtung und eine Kalzinierungsvorrichtung zum Einbringen in den Ofen; der Elutionsmittelauslass der Flugasche-Elutionsvorrichtung ist mit dem Einlass der Elutionsmittel-Reinigungsvorrichtung verbunden; ein Auslass der Elutionsmittelreinigungseinheit ist mit einem Einlass der Verdampfungssalzerzeugungseinheit verbunden; ein Auslass für eluierte Asche der Flugasche-Elutionseinheit ist mit der Trocknungseinheit verbunden; und ein Auslass der Trocknungseinheit ist mit der Kalzinierungseinheit für den Ofeneintritt verbunden. Chlorsalz in Flugasche wird durch eine spezielle mehrstufige Gegenstromspültechnologie entfernt und Industriesalz hergestellt; Die eluierte Asche wird in einem Zementofen kalziniert,

US 2018/148374 A1 beschreibt ein Verfahren zur Behandlung und Verwertung von Bypass-Stäuben aus einem Zementherstellungsprozess. Dieses umfasst a) das Inkontaktbringen des Bypass-Staubs mit einer wässrigen Phase und das Mischen derselben, um eine Suspension zu erhalten, wobei wasserlösliche Bestandteile des Bypass-Staubs in der wässrigen Phase gelöst werden; b) das Durchführen einer Fest-Flüssig-Trennung, insbesondere einer Vakuumfiltration oder einer Filterpressfiltration, um die in der Suspension enthaltenen Feststoffe abzutrennen, wobei eine Sole zurückbleibt; c) Ausfällen eines Teils der in der Sole vorhandenen Schwermetalle und gegebenenfalls Ca und Abtrennen des Niederschlags von der Sole; und d) Unterziehen der Sole einer Elektrokoagulation, wobei ein Flockungsprodukt, das die in der Sole verbleibenden Schwermetalle enthält, abgetrennt wird.

WO 2012/142638 A1 beschreibt ein Verfahren zur Behandlung und Verwertung von Bypass-Stäuben aus dem Zementherstellungsprozess in dem wie folgt vorgegangen wird: a) In-Kontakt-bringen des Bypass-Staubes mit einer wässrigen Phase sowie Vermischen derselben, um eine homogene Aufschlämmung zu erhalten, wobei wasserlösliche Bestandteile des Bypass-Staubes in der wässrigen Phase gelöst werden, b) Durchführen einer Fest-Flüssig-Trennung, um die in der Aufschlämmung enthaltenen Feststoffe abzutrennen, wobei eine Sole verbleibt, c) Abtrennen von in der Sole vorhandenen Schwermetallen und Ausfällen von Calcium als schwerlösliche Calciumsalze CaCO3, um eine behandelte Sole zu erhalten, d) Unterwerfen der behandelten Sole einer fraktionierten Kristallisation.

### Aufgabe und Ziele der Erfindung

Vor dem genannten Hintergrund war es den Erfindern ein Anliegen, ein Verfahren zu entwickeln, mittels dessen sich Rohstoffe aus salzhaltigen Stäuben zurückgewinnen lassen. Mit diesem Verfahren soll eine möglichst hohe Menge an Material in den Wirtschaftskreislauf zurückgeführt werden. Zugleich soll das zurückgewonnene Material durch das Verfahren eine Aufwertung erfahren, indem es in möglichst hoher Reinheit bereitgestellt werden kann.

### Beschreibung der Abbildungen

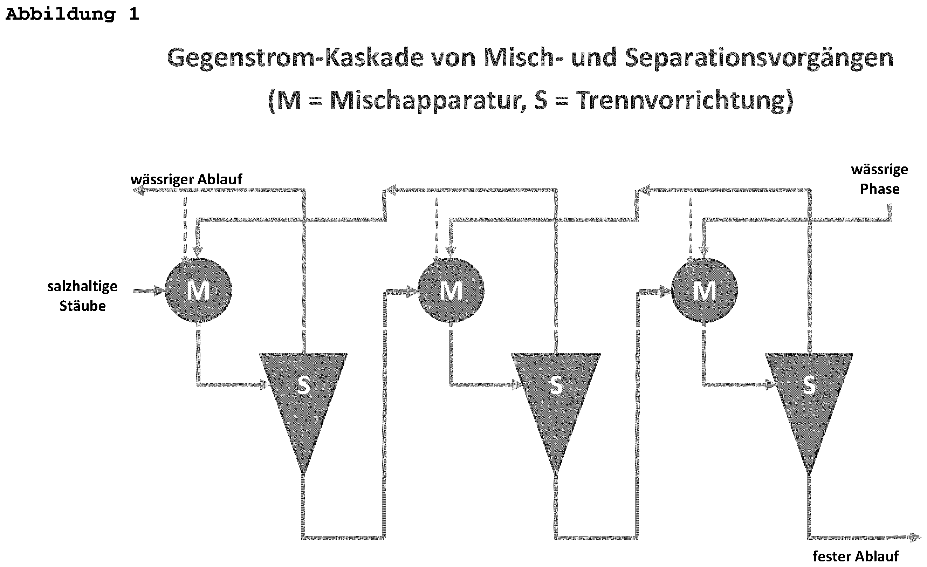

Abbildung 1 zeigt schematisch eine dreistufige Ausgestaltung der mehrstufigen Anordnung, die für das In-Kontakt-Bringen der salzhaltigen Stäube mit einer wässrigen Phase in Schritt a) des erfindungsgemäßen Verfahrens genutzt wird. Die Ausgestaltung umfasst drei Mischapparaturen und drei Trennvorrichtungen. Die salzhaltigen Stäube werden der Mischapparatur der ersten Stufe zugeführt, und die wässrige Phase wird der Mischapparatur der dritten Stufe zugeführt. Der feste Ablauf der Trennvorrichtung der dritten Stufe stellt die behandelten Stäube dar, und der wässrige Ablauf der Trennvorrichtung der ersten Stufe wird Schritt b) des Verfahrens zugeführt.

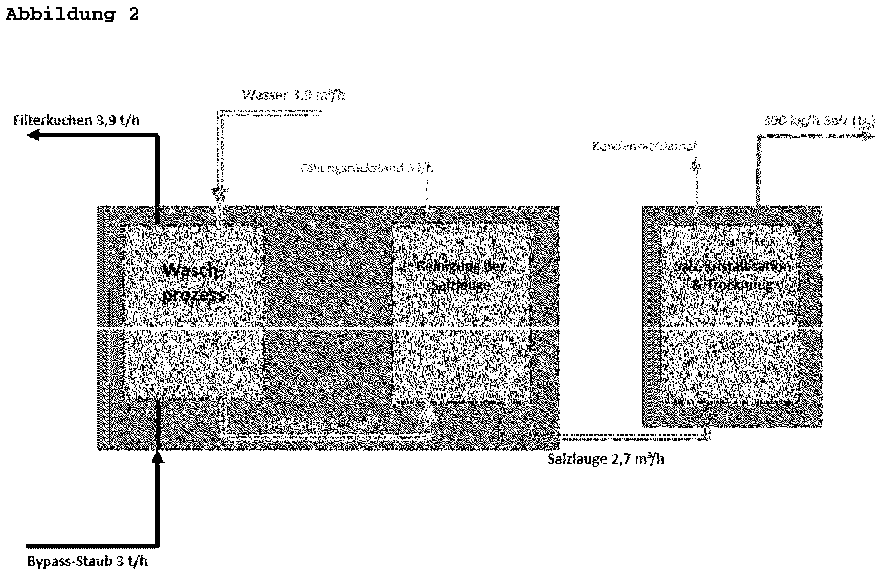

Abbildung 2 zeigt eine beispielhafte Darstellung des erfindungsgemäßen Verfahrens:
"Waschprozess" - Schritt a)
"Reinigung der Salzlauge" - Schritt b)
"Salz-Kristallisation & Trocknung" - Schritt c)

### Zusammenfassung der Erfindung

Die formulierten Aufgaben werden durch das erfindungsgemäße Verfahren gelöst:
Verfahren zur Behandlung von salzhaltigen Stäuben, wobei das Verfahren die folgenden Schritte umfasst:
   a) Bildung einer wässrigen Lösung durch In-Kontakt-Bringen von salzhaltigen Stäuben mit einer wässrigen Phase;
   b) Entfernung von Schwermetallen aus der wässrigen Lösung; und
   c) Abtrennung von Alkalimetallchloriden aus der wässrigen Lösung,
das In-Kontakt-Bringen von salzhaltigen Stäuben mit einer wässrigen Phase in Schritt a) mittels einer mehrstufigen Anordnung, die von den salzhaltigen Stäuben und der wässrigen Phase in entgegengesetzter Richtung durchlaufen wird, erreicht wird, und
das Verhältnis des eingesetzten Volumens an wässriger Phase zur eingesetzten Masse an salzhaltigem Staub in Schritt a) im Bereich von 0.8 L/kg bis 1.4 L/kg, vorzugsweise von 1.0 L/kg bis 1.4 L/kg.

Das Verfahren erlaubt eine effiziente Entfernung und Rückgewinnung von Salzen, insbesondere Natriumchlorid (NaCl) und Kaliumchlorid (KCl), aus salzhaltigen Stäuben. Zugleich wird der Schwermetallgehalt der Stäube reduziert, wodurch neue Einsatzmöglichkeiten für die Stäube erschlossen werden können. Somit ermöglicht das Verfahren die Erschließung mehrerer marktfähiger Wertstoffe aus Materialien, dass anderenfalls aufwendig entsorgt werden müssten.

### Beschreibung der Erfindung

Das erfindungsgemäße Verfahren zur Behandlung von salzhaltigen Stäuben umfasst mehrere Schritte. In Schritt a) wird eine wässrige Lösung durch In-Kontakt-Bringen von salzhaltigen Stäuben mit einer wässrigen Phase gebildet. Dabei wird das In-Kontakt-Bringen von salzhaltigen Stäuben mit einer wässrigen Phase mittels einer mehrstufigen Anordnung, die von den salzhaltigen Stäuben und der wässrigen Phase in entgegengesetzter Richtung durchlaufen wird, erreicht.

In Schritt b) werden Schwermetallen aus der wässrigen Lösung entfernt. Und in Schritt c) werden Alkalimetallchloride aus der wässrigen Lösung abgetrennt.

Das erfindungsgemäße Verfahren zur Behandlung von salzhaltigen Stäuben eignet sich grundsätzlich zur Anwendung in allen Anlagen und Situationen in denen Stäube, die wasserlösliche Salze enthalten, anfallen, z.B. in Müllverbrennungsanlagen oder beim Betrieb von Drehrohröfen.

Aus Gründen der Energieeffizienz ist es allerdings bevorzugt, das erfindungsgemäße Verfahren in Industrieanlagen einzusetzen in denen die Abgas- und/oder Abfallströme überschüssige Wärme mit sich führen, z.B. Anlagen zur Zementherstellung, Ziegelherstellung oder Klinkerherstellung anzuwenden.

### Schritt a)

In dem erfindungsgemäßen Verfahren werden die salzhaltigen Stäube im Schritt a) in Kontakt mit einer wässrigen Phase gebracht. Dies geschieht mittels einer mehrstufigen Anordnung, die von den salzhaltigen Stäuben und der wässrigen Phase in entgegengesetzter Richtung durchlaufen wird.

Dies kann z.B. dadurch erreicht werden, dass in jeder Stufe der mehrstufigen Anordnung eine Mischapparatur zum Vermischen einer festen und einen wässrigen Phase, sowie eine vom Ablauf der Mischapparatur gespeiste Trennvorrichtung zur Trennung in eine feste und eine wässrige Phase eingesetzt werden (siehe Abbildung 1).

Bei der Mischapparatur kann es sich zum Beispiel um einen Rührbehälter handeln.

Bei der Trennvorrichtung kann es sich zum Beispiel um einen Bandfilter, eine Zentrifuge oder eine Filterpresse handeln. Vorzugsweise werden hierbei Zentrifugen, und besonders bevorzugt Dekanterzentrifugen eingesetzt. Die Verwendung von Zentrifugen bietet gegenüber dem Einsatz von Filtern den Vorteil, dass dabei ein mögliches Anbacken von Material am Filter und anderen Teilen der Anlage aufgrund von Ausfällungen und Spritzern nicht auftritt. Dadurch erhöht sich das Wartungsintervall der Anlage.

Bei der im Schritt a) verwendeten wässrigen Phase kann es sich zu Beispiel um Frischwasser, Salzwasser oder Brauchwasser handeln. Insbesondere kann es sich um demineralisiertes Wasser, Leitungswasser, Trinkwasser oder Brauchwasser (d.h. Wasser, das keine Trinkwasserqualität aufweist) handeln. Die Verwendung von Brauchwasser ist dabei ökonomisch vorteilhaft. Um den Wasserverbrauch des Verfahrens zu reduzieren, kann in Schritt c) anfallender Wasserdampf mittels einer Abzugsvorrichtung aufgefangen, kondensiert und als wässrige Phase verwendet werden. Wenn wasserlösliche Bestandteile der wässrigen Lösung in Schritt c) teilweise oder vollständig mittels fraktionierter Kristallisation abgetrennt werden, kann die dabei gewonnene Mutterlauge ebenfalls als wässrige Phase verwendet werden. Bei einer solchen Verfahrensweise wird bevorzugt, dass die Temperatur während der fraktionierten Kristallisation geringer ist als die Temperatur während des Schritts a), so dass eine effiziente Auflösung wasserlöslicher Bestandteile in der wässrigen Phase gewährleistet werden kann.

Des Weiteren kann die wässrige Phase eine oder mehrere Hilfssubstanzen enthalten, um die Behandlung der salzhaltigen Stäube zu begünstigen, und um die Reinigungswirkung bzw. die Aufnahme von flüchtigen Bestandteilen zu unterstützen. In diesem Zusammenhang ist es z.B. möglich, der wässrigen Phase eine oder mehrere Hilfssubstanzen zuzusetzen, die aus anorganischen Substanzen (vorzugsweise Chloriden, Nitraten, Sulfiden und Sulfaten der Alkali- und Erdalkalimetalle als auch Ammoniumpolysulfid) und organischen Substanzen (vorzugsweise Salzen chelatbildender Säuren, wie Na₂-EDTA) ausgewählt werden. Hierbei umfassen die organischen und anorganischen Substanzen auch Säuren, wie z.B. Mineralsäuren (z.B. HCl, H₂SO₄, H₃PO₄ usw.) und/oder organische Säuren (z.B. Ameisensäure, Essigsäure), und Basen, wie z.B. anorganische Basen (z.B. NaOH, KOH, LiOH, Ca(OH)₂) und/oder organische Basen (z.B. stickstoffhaltige organische Basen, wie z.B. Triethylamin und Pyridin).

Zum Beispiel kann der wässrigen Phase Calciumchlorid oder Wasserstoffchlorid (in gasförmiger Form oder in Form einer wässrigen Salzsäurelösung) als Additiv zur Ausfällung von Sulfationen zugegeben werden. Dadurch kann die Reinheit von in Schritt c) erhaltenem Kaliumchlorid erhöht werden.

Die Zugabe organischer Salze oder Säuren zu der wässrigen Phase kann eine löslichkeitsverbessernde Wirkung auf Metalle ausüben, da diese dann in Lösung komplexiert werden und somit den salzhaltigen Stäuben entzogen werden. Dies ist zur Reduzierung der Schwermetallbelastung günstig, sowohl für den Fall, dass die behandelten Stäube entsorgt werden, als auch für den Fall, dass sie weiterverwertet werden. In letzterem Fall kann die Belastung des Endproduktes mit Metallen reduziert werden.

Wenn der wässrigen Phase organische oder anorganische Hilfssubstanzen zugesetzt werden, beträgt die Konzentration dieser organischen und/oder anorganischen Substanzen in der wässrigen Phase vorzugsweise 0,01 - 10 Gew.-%, stärker bevorzugt 0,1 - 5 Gew.-%, und am stärksten bevorzugt 0,5 - 3 Gew.-%. Für eine möglichst ökonomische Prozessführung ist die Verwendung von Wasser (Leitungs- bzw. Brauchwasser) als wässrige Phase bevorzugt, wohingegen die Verwendung einer wässrigen Phase, die eine oder mehrere der o.g. Hilfssubstanzen enthält, aus den o.g. genannten Gründen für eine bessere Auswaschung löslicher Substanzen oder zur Entfernung unerwünschter Stoffe bevorzugt sein kann. Die Hilfssubstanzen können der wässrigen Phase vor dem In-Kontakt-Bringen mit den salzhaltigen Stäuben zugegeben oder in einer der Stufen der mehrstufigen Anordnung eindosiert werden.

Bei entsprechenden Hilfssubstanzen kann es sich beispielsweise um anorganische Substanzen, insbesondere Salze wie Chloride, Nitrate, Sulfide oder Sulfate der Alkali- und Erdalkalimetalle oder auch Ammoniumpolysulfid handeln. Die wässrige Phase kann auch organische Substanzen, wie beispielsweise chelatbildende Säuren wie EDTA enthalten. Die letzteren erhöhen die Löslichkeit der Schwermetallionen in der wässrigen Lösung und begünstigen somit deren Entfernung aus den salzhaltigen Stäuben.

In einer bevorzugten Ausführungsform des Verfahrens wird für Schritt a) eine mehrstufige Gegenstromkaskade von Zentrifugen, bevorzugt Dekanterzentrifugen, eingesetzt, wobei
die salzhaltigen Stäube, sowie der wässrige Ablauf der der letzten Stufe zugehörigen Zentrifuge der der ersten Stufe zugehörigen Mischapparatur zugeführt werden,
der der letzten Stufe zugehörigen Mischapparatur Wasser als wässrige Phase zugeführt wird,
mit Ausnahme der letzten Stufe, der feste Ablauf einer Zentrifuge jeweils der der nächsten Stufe zugehörigen Mischapparatur zugeführt wird,
mit Ausnahme der ersten Stufe, der wässrige Ablauf einer Zentrifuge jeweils der der vorhergehenden Stufe zugehörigen Mischapparatur zugeführt wird, sowie
der wässrige Ablauf der der ersten Stufe zugehörigen Zentrifuge als Ausgangsmaterial für Schritt b) dient.

Die in Schritt a) gewonnene wässrige Lösung, enthält die löslichen Bestandteile der salzhaltigen Stäube in gelöster Form und wird dem nachstehend beschriebenen Schritt b) zur Weiterbehandlung zugeführt.

Die wasserunlöslichen Bestandteile bilden den festen Ablauf der mehrstufigen Anordnung. Diese behandelten, salzarmen Stäube, können der weiteren Verwertung, zugeführt werden. Zum Beispiel können sie in den Herstellungsprozess, der den zu behandelnden salzhaltigen Staub ursprünglich generiert hat, zurückgeführt werden.

Vom Standpunkt der Minimierung der benötigten Wassermenge bei gleichzeitiger Maximierung der Menge an Salzen, die den salzhaltigen Stäuben entzogen wird, umfasst die in Schritt a) verwendete mehrstufige Anordnung bevorzugt 2 bis 5 Stufen, insbesondre bevorzugt 3 oder 4 Stufen. Ferner kann hierzu ein Teil der in einer Stufe abgetrennten wässrigen Phase dem Zulauf derselben Stufe zugeführt werden; z.B. kann ein Teil des wässrigen Ablaufes einer Zentrifuge an die derselben Stufe zugehörige Mischapparatur zurückgeführt werden. Je mehr Stufen eingesetzt werden, desto weniger Wasser wird für eine gegebene Waschleistung benötigt.

Ferner liegt das Verhältnis des eingesetzten Volumens an wässriger Phase zur eingesetzten Masse an salzhaltigem Staub in Schritt a) vom Standpunkt der der Minimierung der benötigten Wassermenge bei gleichzeitiger Maximierung der Menge an Salzen im Bereich von 0.8 L/kg bis 1.4 L/kg, vorzugsweise von 1.0 L/kg bis 1.4 L/kg.

Der Einsatz einer größeren Menge an wässriger Phase relativ zur eingesetzten Masse an salzhaltigem Staub ermöglicht es, mehr Salz zu lösen, jedoch erhöht sich dadurch potentiell auch die Menge an Wasser, die in Schritt c) verdampft werden muss.

In der vorliegenden Anmeldung bezieht sich der Begriff *"wasserlösliche Bestandteile"* auf anorganische oder organische Substanzen, welche im Schritt a) in der wässrigen Phase gelöst werden und somit Bestandteile der wässrigen Lösung werden. Die *"wasserunlöslichen Bestandteile"* sind hingegen amorphe oder kristalline Feststoffe, welche bei der Durchführung von Schritt a) nicht in Lösung gehen und von der wässrigen Lösung durch Filtration oder Zentrifugieren abgetrennt werden können. Bei wasserlöslichen Bestandteilen und wasserunlöslichen Bestandteilen kann es sich beispielsweise um Bestandteile der salzhaltigen Stäube handeln. Allerdings können die wasserlöslichen Bestandteile und die wasserunlöslichen Bestandteile auch chemische Reaktionsprodukte der salzhaltigen Stäube mit der wässrigen Phase enthalten.

Dadurch, dass die salzhaltigen Stäube in Kontakt mit der wässrigen Phase gebracht werden, lösen sich die wasserlöslichen Bestandteile in der wässrigen Phase. Die wasserunlöslichen Bestandteile werden vorzugsweise abgetrennt, z.B. durch Filtration oder durch Zentrifugieren. Die hierbei abgetrennten wasserunlöslichen Bestandteile (z.B. der erhaltene Filterkuchen) weisen eine maßgeblich verringerte Konzentration an Alkali- und Erdalkalisalzen (Chloride, Sulfate etc.) als auch an Schwermetallen (z.B. As, Be, Cd, Co, Cr, Cu, Hg, Mn, Ni, Pb, Sb, Sn, Te, Tl, V) auf. Somit können, falls gewünscht, die abgetrennten wasserunlöslichen Bestandteile (z.B. der Filterkuchen im Fall einer Filtration) gegebenenfalls in das in der Industrieanlage durchgeführte Verfahren, welches den zu behandelnden salzhaltigen Staub ursprünglich generiert hat, z. B. ein Zement- bzw. Klinkerherstellungsprozess, zurückgeführt werden, ohne dass dies zur Anreicherung des Produkts der Industrieanlage mit diesen unerwünschten Substanzen führt. Die abgetrennten wasserunlöslichen Bestandteile können auch einer intensiveren Reinigung unterzogen werden, z.B. durch Extraktion, um den Gehalt an unerwünschten Bestandteilen weiter zu reduzieren. In kleinem Maßstab kann solch eine Extraktion z.B. durch Soxleth-Extraktion durchgeführt werden. Großtechnisch lässt sich solch eine Extraktion z.B. mit einem mixer-settler (Mischabsetzer) durchführen.

Die wasserlöslichen Bestandteile, die sich im Schritt a) in der wässrigen Phase lösen, setzen sich im Wesentlichen aus Chloriden und anderen flüchtigen Bestandteilen, wie Sulfaten (bzw. SO₃) zusammen, können aber auch andere Bestandteile, wie Schwermetalle oder Nitrate enthalten.

Die wasserunlöslichen Bestandteile, sprich die behandelten Stäube weisen einen wesentlich reduzierten Chloridgehalt auf.

Abhängig von dem Verhältnis des eingesetzten Volumens an wässriger Phase zur eingesetzten Masse an salzhaltigem Staub lässt sich der Chloridanteil der wasserunlöslichen Bestandteile nach dem In-Kontakt-Bringen mit der wässrigen Phase im Schritt a) und ihrer Abtrennung auf weniger als 20 Gew.-%, bevorzugt weniger als 10 Gew.-%, stärker bevorzugt weniger als 5 Gew.-%, und am stärksten bevorzugt weniger als 2 Gew.-% des Chloridanteils der Stäube vor dem Einleiten durch die wässrige Phase (Gew.-%), d.h. des Chloridanteils der Ausgangsmaterialien, reduzieren. Angesichts dessen eignet sich der behandelte, salzarme Staub, bei Rückführung in einen industriellen Prozess zur Senkung des Chloridanteils der Prozessströme.

Die im vorhergehenden beschriebene mehrstufige Fest-Flüssigtrennung bietet den Vorteil, dass sie eine hohe Waschleistung bei geringen Wassereinsatz erreicht.

### Schritt b)

In dem erfindungsgemäßen Verfahren werden in Schritt b) Schwermetalle aus der in Schritt a) erhaltenen wässrige Lösung entfernt. Die Durchführung dieses Schrittes vor der Rückgewinnung von in den salzhaltigen Stäube enthaltenen und beim In-Kontakt-Bringen mit den salzhaltigen Stäube in der wässrigen Phase gelösten Alkali- und Erdalkalimetallsalzen, erlaubt es, den Gehalt an Schwermetallen bzw. derer Salze in den nach Schritt c) erhaltenen Produkten möglichst gering zu halten.

Schwermetalle können zum Beispiel durch die Zugabe von Sulfiden, Polysulfiden oder anderen Anionen schwer löslicher Schwermetallsalze zu der in Schritt a) erhaltenen wässrigen Lösung ausgefällt werden. So ist es möglich, Metalle wie As, Be, Br, Cd, Cr, Hg, Ni, Pb, Tl, V und Zn als schwerlösliche Salze (z.B. als Sulfide) abzutrennen. Die genannten Anionen werden vorzugsweise in Form von Natriumverbindungen, z.B. Na₂S in die wässrige Lösung eingebracht. Eine weitere bevorzugte Variante ist die Einleitung von gasförmigem H₂S in die wässrige Lösung.

Die ausgefällten Schwermetallsalze können durch Verfahren, die dem Fachmann bekannt sind, z.B. durch Filtration oder Zentrifugieren, von der wässrigen Lösung abgetrennt und danach getrocknet werden.

Ferner können die Schwermetalle mittels geeigneter Ionentauscher-Harze von der wässrigen Lösung abgetrennt und wiedergewonnen werden. Die hierfür geeigneten Ionentauscher-Harze sind dem Fachmann bekannt und umfassen unter anderem Harze mit Carboxylgruppen oder Sulfonsäuregruppen. Entsprechende Ionentauscher-Harze sind beispielsweise unter Handelsnamen Lewatit^{®} (Lanxess), Dowex^{®} (Dow Chemicals) und Amberlite^{®} (Rohm and Haas) kommerziell erhältlich.

Als am effektivsten für die Abscheidung der Schwermetalle hat sich jedoch ein Verfahren mittels Elektrokoagulation erwiesen.

Das Verfahren der Elektrokoagulation ist dem die dem Fachmann bekannt und ist z.B. in der WO 2016/189374 A1 beschrieben. Dabei wird ein Elektrodenpaar in die Lösung eingeführt und durch Anlegen einer Spannung die oxidative Zersetzung der Anode. Die aus der Anode hervorgehenden Kationen gehen eine Redoxreaktion mit gelösten Schwermetallionen ein, welche zur Bildung eines die Schwermetalle enthaltenden Flokkulats führt.

Nach der Ausflockung der Schwermetalle können diese durch Verfahren, die dem Fachmann bekannt sind, z.B. durch Filtration oder Zentrifugieren, von der wässrigen Lösung abgetrennt und danach getrocknet werden.

Aufgrund seines hohen Salzgehaltes weist die in Schritt a) erhaltene wässrige Lösung eine hohe elektrische Leitfähigkeit auf, weshalb sich das Verfahren der Elektrokoagulation besonders gut zur Entfernung der Schwermetallionen daraus eignet.

Vorzugsweise wird für die Elektrokoagulation eine Eisen- und/oder eine Aluminium-Elektrode eingesetzt.

Falls die salzhaltigen Stäube nennenswerte Mengen an Quecksilber enthalten, kann dieses auch bereits vor Schritt a) abgetrennt werden, indem die Stäube erhitzt werden, um das Quecksilber in den gasförmigen Zustand zu überführen und das gasförmige Quecksilber dann mittels eines Sulfids, z.B. Natriumsulfid, gebunden wird. Ein solches Verfahren ist dem Fachmann bekannt und erlaubt ebenfalls die (selektive) Abtrennung anderer leicht flüchtiger Schwermetalle.

### Schritt c)

In dem erfindungsgemäßen Verfahren werden im Schritt c) Alkalimetallchloride aus der wässrigen Lösung abgetrennt.

Vorzugsweise erfolgt die Abtrennung durch fraktionierte Kristallisation. Dabei wird die wässrige Lösung auf ca. 70% des Volumens vor dem Schritt c), vorzugsweise auf ca. 50% des Volumens vor dem Schritt c), besonders bevorzugt auf ca. 30% des Volumens vor dem Schritt c) eingedampft. Die so erhaltene konzentrierte wässrige Lösung kann anschließend abgekühlt werden, so dass es zu einer fraktionierten Kristallisation der Alkalimetallchloride kommt. Die Alkalimetallchloride kristallisieren nacheinander aus, so dass sie eine besonders hohe Reinheit aufweisen und somit wirtschaftlich wertvoller und vielfältiger einsetzbar sind. Die auskristallisierten Alkalimetallchloride können durch Verfahren, die dem Fachmann bekannt sind, z.B. durch Filtrieren, von der wässrigen Lösung abgetrennt und danach getrocknet werden.

Das erfindungsgemäße Verfahren erlaubt somit die Gewinnung von hochreinen Alkalimetallchloriden aus salzhaltigen Stäuben, die z.B. beim Betrieb von Drehrohröfen, insbesondere in Zement-, Klinker- und Ziegelherstellungsprozessen anfallen.

Bei den nach dem erfindungsgemäßen Verfahren erhaltenen Alkalimetallchloriden, handelt es sich vorranging um Natriumchlorid und Kaliumchlorid. Aufgrund der Tatsache, dass sie durch fraktionierte Kristallisation gewonnen werden, weisen sie einen hohen Reinheitsgrad auf und können somit diversen Verwendungen zugeführt werden. Solche Verwendungen umfassen die Verwendung als Streusalz, Leckstein, Dünger, Rohstoff für Elektrolysen zur Chlor- und/oder Alkalihydroxidgewinnung, Flammschutz, Staubbinder, als Düngerkomponente oder zur Glas- bzw. Keramikherstellung.

In Schritt c) anfallender Wasserdampf kann mittels einer Abzugsvorrichtung aufgefangen, kondensiert und als wässrige Phase in Schritt a) verwendet werden. Dies gilt ebenfalls für die nach Kristallisation der Alkalimetallchloride verbleibende wässrige Phase.

Falls nicht anders angegeben, beziehen sich sämtliche Prozentangaben in der vorliegenden Anmeldung auf Gewichtsprozent.

### Beispiele

### Beispiel 1:

Die folgende Tabelle zeigt die Analyseergebnisse eines Staubes vor ("Bypassstaub") und nach ("Filterkuchen") Durchlaufen des erfindungsgemäßen Verfahrens. Wie aus den daten ersichtlich ist, weist der behandelte Staub einen merklich reduzierten Salzgehalt auf.

**Tabelle 1 - Salzgehalt vor und nach Behandlung**

| **Material** | | **Bypassstaub** | **Filterkuchen** |
|---|---|---|---|
| Datum | | 22. - 23.05.2021 | 22. - 25.05.2021 |
| Uhrzeit | | 02:00 - 02:00 | 15:30 - 15:00 |
| Typ | | Durchschnitt | Durchschnitt |
| Probe Nr. | | 563351 | 5633350 |
| CO2 (950°C) | % | 3,38 | 6,22 |
| Wasser (950°C) | % | 2,25 | 18,73 |
| Chlorid | % | 4,63 | 0,132 |
| Glühverlust | % | 5,63 | 24,95 |
| Si02 | gvh % | 13,51 | 12,36 |
| Al2O3 | gvh % | 3,19 | 2,93 |
| Ti02 | gvh % | 0,14 | 0,13 |
| P205 | gvh % | 0,07 | 0,05 |
| Fe203 | gvh % | 1,54 | 1,48 |
| Manganoxid | gvh % | 0,02 | 0,02 |
| MgO | gvh % | 0,95 | 1,01 |
| CaO | gvh % | 48,15 | 46,51 |
| SO3 | gvh % | 8,35 | 8,07 |
| K20 | gvh % | 6,92 | 1,15 |
| Na20 | gvh % | 0,44 | 0,15 |
| Na20-Äq. | gvh % | 4,99 | 0,91 |

### Beispiel 2

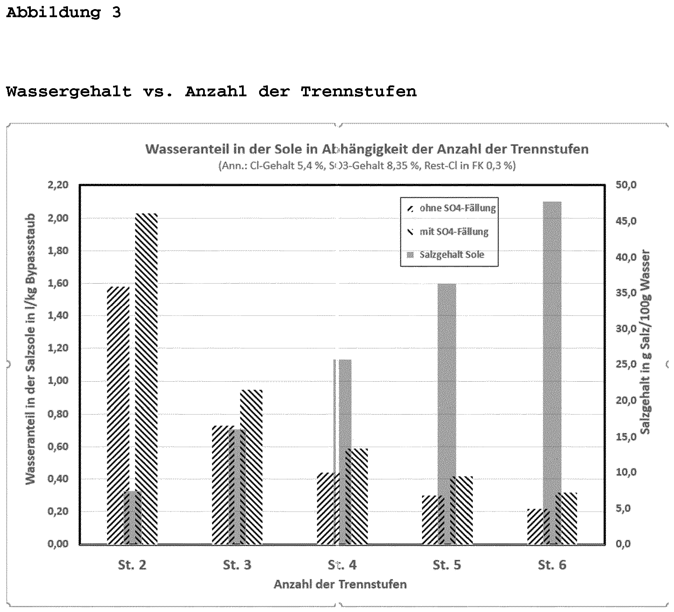

Die Grafik der Abbildung 3 zeigt den Wassergehalt einer nach Schritt a) des erfindungsgemäßen Verfahrens erhaltenen wässrigen Lösung bei Verwendung verschiedener Anzahlen von Trennstufen. Wie zu erkennen ist, nimmt die Salzkonzentration der erhaltenen wässrigen Lösung mit steigender Anzahl der Trennstufen zu.

### Beispiel 3

Die folgende Tabelle zeigt die Ergebnisse eines Versuches zur Nutzung von Elektrokoagulation, um Schwermetalle aus der in Schritt a) erhaltenen wässrigen Lösung zu entfernen. Hierbei handelt es sich um die Analysen zweier Durchschnittsproben, die aus jeweils 11 Einzelproben gemischt wurden.

**Tabelle 2 - Entfernung von Schwermetallen mittels Elektrokoagulation**

| Komponente | Einheit | Konzentration | | Veränderung in [%] |
|---|---|---|---|---|
| | | vor SM- Fällung | nach SM-Fällung | |
| Chlorid | [g/1] | 72,7 | 69,1 | |
| Sulfat | [g/1] | 1,6 | 1,8 | |
| Calcium | [g/1] | 10,1 | 9,19 | |
| Kalium | [g/1] | 59 | 54,1 | |
| Natrium | [g/1] | 2,73 | 2,49 | |
| Antimon | [µg/1] | 0,337 | 0,792 | 135 0 |
| Arsen | [µg/1] | 0,682 | 0,333 | -51,2 |
| Beryllium | [µg/1] | 1,1 | 1,22 | 10,9 |
| Blei | [µg/1] | 19.800 | 10,8 | -99,9 |
| Cadmium | [µg/1] | 0,153 | 0,163 | 6,5 |
| Chrom | [µg/1] | 250 | 5,11 | -98,0 |
| Kobalt | [µg/1] | 1,69 | 2,61 | 54,4 |
| Kupfer | [µg/1] | 0,572 | 0,448 | -21,7 |
| Mangan | [µg/1] | 1,26 | 3.060 | aus Fe-Elektrode |
| Nickel | [µg/1] | 5,14 | 15 | 192 |
| Quecksilber | [µg/1] | < 0,2 | < 0,2 | |
| Tellur | [µg/1] | 0,121 | 0,16 | 32,2 |
| Thallium | [µg/1] | 319 | 77 | -75,9 |
| Vanadium | [µg/1] | 3,93 | 3,3 | -16,0 |
| Zink | [µg/1] | 40,1 | 17,2 | -57,1 |
| Zinn | [µg/1] | 0,12 | 1,31 | aus Fe-Elektrode |

Wie aus den Daten ersichtlich ist, wurden insbesondere die Elemente Blei und Chrom fast vollständig gefällt. Ebenso wurde die Thallium-Konzentration deutlich reduziert.

Für eine Reihe weiterer Komponenten, von denen jedoch auch in der Ausgangslauge nur relativ geringe und daher unkritische Gehalte gemessen wurden, ergab sich ein uneinheitliches Bild. Dies ist zum Teil auch dadurch bedingt, dass die Einzelproben vor und nach Sulfatfällung zeitgleich gezogen wurden, obwohl das Volumen von Neutralisationsbehälter, Reaktor und Flotation einer Verweilzeit von mehreren Stunden entsprach. Daher spiegeln die vor und nach Schwermetallfällung gezogenen Proben nicht exakt den gleichen Betriebszustand der Versuchsanlage wider, woraus eine gewisse Unschärfe bei dem Vergleich dieser Daten resultiert. Auch führen die nur sehr kleinen Absolutwerte in der prozentualen Bewertung zu sehr großen Zahlen, obwohl die Abweichungen zwischen den gemessenen Werten tatsächlich im Bereich der Analysenunschärfe liegen.

Insbesondere bei Mangan, und wohl auch bei Zinn, ist die beobachtete Zunahme beim Durchlaufen der Anlage darauf zurückzuführen, dass die Eisen-Elektroden (Fe-Elektroden) des Koagulationsreaktors mit ca. 1 % Mangan und geringen Zinn-Anteilen legiert waren, die sich auch in der Reinlösung wiederfinden. Eine solche Zufuhr an diesen Elementen lässt sich durch Ausweichen auf niedriger legiertes Anodenmaterial vermeiden.

## Patentansprüche

1. Verfahren zur Behandlung von salzhaltigen Stäuben, wobei das Verfahren die folgenden Schritte umfasst:
a) Bildung einer wässrigen Lösung durch In-Kontakt-Bringen von salzhaltigen Stäuben mit einer wässrigen Phase;
b) Entfernung von Schwermetallen aus der wässrigen Lösung; und
c) Abtrennung von Alkalimetallchloriden aus der wässrigen Lösung,
das In-Kontakt-Bringen von salzhaltigen Stäuben mit einer wässrigen Phase in Schritt a) mittels einer mehrstufigen Anordnung, die von den salzhaltigen Stäuben und der wässrigen Phase in entgegengesetzter Richtung durchlaufen wird, erreicht wird, und
das Verhältnis des eingesetzten Volumens an wässriger Phase zur eingesetzten Masse an salzhaltigem Staub in Schritt a) im Bereich von 0.8 L/kg bis 1.4 L/kg, vorzugsweise von 1.0 L/kg bis 1.4 L/kg.

2. Verfahren gemäß Anspruch 1, wobei für Schritt a) eine mehrstufige Gegenstromkaskade eingesetzt wird, die in jeder Stufe eine Mischapparatur, sowie eine vom Ablauf der Mischapparatur gespeiste Trennvorrichtung umfasst.

3. Verfahren gemäß Anspruch 2, wobei Bandfilter, Zentrifugen oder Filterpressen als Trennvorrichtung eingesetzt werden.

4. Verfahren gemäß Anspruch 3, wobei für Schritt a) eine mehrstufige Gegenstromkaskade von Zentrifugen, bevorzugt Dekanterzentrifugen, eingesetzt wird, und wobei
die salzhaltigen Stäube, sowie der wässrige Ablauf der der letzten Stufe zugehörigen Zentrifuge der der ersten Stufe zugehörigen Mischapparatur zugeführt werden,
der der letzten Stufe zugehörigen Mischapparatur Wasser als wässrige Phase zugeführt wird,
mit Ausnahme der letzten Stufe, der feste Ablauf einer Zentrifuge jeweils der der nächsten Stufe zugehörigen Mischapparatur zugeführt wird,
mit Ausnahme der ersten Stufe, der wässrige Ablauf einer Zentrifuge jeweils der der vorhergehenden Stufe zugehörigen Mischapparatur zugeführt wird, sowie
der wässrige Ablauf der der ersten Stufe zugehörigen Zentrifuge als Ausgangsmaterial für Schritt b) dient.

5. Verfahren gemäß einem der Ansprüche 2 bis 4, wobei es sich bei der Mischapparatur um einen Rührbehälter handelt.

6. Verfahren gemäß einem der Ansprüche 2 bis 5, wobei die mehrstufige Anordnung in Schritt a) 2 bis 5 Stufen, vorzugsweise 3 oder 4 Stufen, umfasst.

7. Verfahren gemäß einem der Ansprüche 1 bis 6, wobei Elektrokoagulation zur Entfernung der Schwermetalle verwendet wird.

8. Verfahren gemäß einem der Ansprüche 1 bis 7, wobei die Alkalimetallchloride in Schritt c) durch fraktionierte Kristallisation abgetrennt werden.

9. Verfahren gemäß einem der Ansprüche 1 bis 8, bei dem es sich bei den Alkalimetallchloriden mindestens um eines, ausgewählt aus der Gruppe umfassend Natriumchlorid (NaCl) und Kaliumchlorid (KCl), handelt.

10. Verfahren gemäß einem der Ansprüche 1 bis 9, bei dem die wässrige Phase wenigstens eine Hilfssubstanz enthält, die aus anorganischen Substanzen, vorzugsweise Ammoniumpolysulfid und Chloride, Nitrate, Sulfide und Sulfate der Alkali- und Erdalkalimetalle, und organischen Substanzen, vorzugsweise Salze chelatbildender Säuren, wie EDTA, ausgewählt ist.

11. Verfahren gemäß einem der Ansprüche 1 bis 10, bei dem die wässrige Lösung bei der fraktionierten Kristallisation auf ca. 70% des Volumens vor dem Schritt c), vorzugsweise auf ca. 50% des Volumens vor dem Schritt c), besonders bevorzugt auf ca. 30% des Volumens vor dem Schritt c) eingedampft wird.

12. Verfahren gemäß einem der Ansprüche 1 bis 11, bei dem es sich bei den Schwermetallen mindestens um eines, ausgewählt aus der Gruppe umfassend As, Be, Cd, Co, Cr, Cu, Hg, Mn, Ni, Pb, Sb, Sn, Te, T1 und V, handelt.

13. Verfahren gemäß einem der Ansprüche 4 bis 12, wobei ein Teil des wässrigen Ablaufes einer Zentrifuge an die derselben Stufe zugehörige Mischapparatur zurückgeführt wird.

14. Verfahren gemäß einem der Ansprüche 1 bis 13, wobei in der ersten Stufe der mehrstufigen Anordnung ein Additiv zur Ausfällung von Sulfationen zugegeben wird.

## Claims

1. Method for treating salt-containing dusts,
wherein the method comprises the following steps:
a) forming an aqueous solution by bringing salt-containing dusts into contact with an aqueous phase;
b) removing heavy metals from the aqueous solution; and
c) separating alkali metal chlorides from the aqueous solution,
salt-containing dusts are brought into contact with an aqueous phase in step a) by means of a multi-stage arrangement through which the salt-containing dusts and the aqueous phase pass in opposite directions, and
the ratio of the volume of aqueous phase used to the mass of salt-containing dust used in step a) is in the range of from 0.8 L/kg to 1.4 L/kg, preferably from 1.0 L/kg to 1.4 L/kg.

2. Method according to claim 1, wherein a multi-stage counterflow cascade which comprises a mixing apparatus in each stage as well as a separating device fed by the discharge of the mixing apparatus is used for step a).

3. Method according to claim 2, wherein belt filters, centrifuges or filter presses are used as the separating device.

4. Method according to claim 3, wherein a multi-stage counterflow cascade of centrifuges, preferably decanter centrifuges, is used for step a), and wherein
the salt-containing dusts as well as the aqueous discharge of the centrifuge associated with the final stage are supplied to the mixing apparatus associated with the first stage,
water is supplied as the aqueous phase to the mixing apparatus associated with the final stage,
with the exception of the final stage, the solid discharge of a centrifuge is supplied in each case to the mixing apparatus associated with the next stage,
with the exception of the first stage, the aqueous discharge of a centrifuge is supplied in each case to the mixing apparatus associated with the previous stage, and
the aqueous discharge of the centrifuge associated with the first stage serves as the starting material for step b).

5. Method according to any of claims 2 to 4, wherein the mixing apparatus is an impeller-type mixer.

6. Method according to any of claims 2 to 5, wherein the multi-stage arrangement in step a) comprises 2 to 5 stages, preferably 3 or 4 stages.

7. Method according to any of claims 1 to 6, wherein electrocoagulation is used to remove the heavy metals.

8. Method according to any of claims 1 to 7, wherein the alkali metal chlorides are separated in step c) by means of fractionated crystallisation.

9. Method according to any of claims 1 to 8, wherein the alkali metal chlorides are at least one selected from the group comprising sodium chloride (NaCl) and potassium chloride (KCl).

10. Method according to any of claims 1 to 9, wherein the aqueous phase contains at least one auxiliary substance which is selected from inorganic substances, preferably ammonium polysulfide and chlorides, nitrates, sulfides and sulfates of the alkali and alkaline earth metals, and organic substances, preferably salts of chelating acids, such as EDTA.

11. Method according to any of claims 1 to 10, wherein the aqueous solution is evaporated during the fractionated crystallisation to approx. 70% of the volume prior to step c), preferably to approx. 50% of the volume prior to step c), particularly preferably to approx. 30% of the volume prior to step c).

12. Method according to any of claims 1 to 11, wherein the heavy metals are at least one selected from the group comprising As, Be, Cd, Co, Cr, Cu, Hg, Mn, Ni, Pb, Sb, Sn, Te, Tl and V.

13. Method according to any of claims 4 to 12, wherein some of the aqueous discharge of a centrifuge is fed back to the mixing apparatus associated with the same stage.

14. Method according to any of claims 1 to 13, wherein an additive is added in the first stage of the multi-stage arrangement for precipitating sulfate ions.

## Revendications

1. Procédé de traitement des poussières salines, dans lequel le procédé comprend les étapes suivantes :
a) la formation d'une solution aqueuse par mise en contact de poussières salines avec une phase aqueuse ;
b) l'élimination de métaux lourds de la solution aqueuse ; et
c) la séparation de chlorures de métaux alcalins de la solution aqueuse, la mise en contact de poussières salines avec une phase aqueuse à l'étape a) au moyen d'un ensemble à étapes multiples, qui est traversé par les poussières salines et la phase aqueuse dans des directions opposées, et
le rapport entre le volume de phase aqueuse utilisé et la masse de poussière contenant du sel utilisée à l'étape a) se situant dans la plage de 0,8 L/kg à 1,4 L/kg, de préférence de 1,0 L/kg à 1,4 L/kg.

2. Procédé selon la revendication 1, dans lequel, pour l'étape a), une cascade à contre-courant à étages multiples est utilisée, laquelle comprend à chaque étage un mélangeur, ainsi qu'un dispositif de séparation alimenté par l'écoulement du mélangeur.

3. Procédé selon la revendication 2, dans lequel des filtres à bande, des centrifugeuses ou des filtres-presses sont utilisés comme dispositifs de séparation.

4. Procédé selon la revendication 3, dans lequel
pour l'étape a), une cascade à contre-courant à étages multiples de centrifugeuses, de manière préférée de décanteurs centrifuges, est utilisée, et dans lequel
les poussières salines, ainsi que l'écoulement aqueux de la centrifugeuse appartenant au dernier étage, sont amenés au mélangeur appartenant au premier étage,
de l'eau est amenée en tant que phase aqueuse au mélangeur associé au dernier étage,
à l'exception du dernier étage, l'écoulement solide d'une centrifugeuse est amené respectivement au mélangeur appartenant au prochain étage,
à l'exception du premier étage, l'écoulement aqueux d'une centrifugeuse est respectivement dirigé vers l'étage précédent, et
l'écoulement aqueux de la centrifugeuse appartenant au premier étage sert de matière première pour l'étape b).

5. Procédé selon l'une quelconque des revendications 2 à 4, dans lequel le mélangeur est un récipient agitateur.

6. Procédé selon l'une quelconque des revendications 2 à 5, dans lequel l'ensemble à étages multiples comprend à l'étape a) 2 à 5 étages, de préférence 3 ou 4 étages.

7. Procédé selon l'une quelconque des revendications 1 à 6, dans lequel l'électrocoagulation est utilisée pour éliminer les métaux lourds.

8. Procédé selon l'une quelconque des revendications 1 à 7, dans lequel les chlorures de métaux alcalins sont séparés à l'étape c) par cristallisation fractionnée.

9. Procédé selon l'une quelconque des revendications 1 à 8, dans lequel les chlorures de métaux alcalins sont au moins un élément choisi dans le groupe comprenant le chlorure de sodium (NaCl) et le chlorure de potassium (KCl).

10. Procédé selon l'une quelconque des revendications 1 à 9, dans lequel la phase aqueuse contient au moins une substance auxiliaire, qui est choisie parmi des substances inorganiques, de préférence du polysulfure d'ammonium ainsi que des chlorures, nitrates, sulfures et sulfates des métaux alcalins et alcalino-terreux, et des substances organiques, de préférence des sels d'acides chélateurs tels que l'EDTA.

11. Procédé selon l'une quelconque des revendications 1 à 10, dans lequel la solution aqueuse est concentrée par évaporation lors de la cristallisation fractionnée à environ 70 % du volume avant l'étape c), de préférence à environ 50 % du volume avant l'étape c), et de manière particulièrement préférée à environ 30 % du volume avant l'étape c).

12. Procédé selon l'une quelconque des revendications 1 à 11, dans lequel les métaux lourds sont au moins un élément choisi dans le groupe comprenant As, Be, Cd, Co, Cr, Cu, Hg, Mn, Ni, Pb, Sb, Sn, Te, Tl et V.

13. Procédé selon l'une quelconque des revendications 4 à 12, dans lequel une partie de l'écoulement aqueux d'une centrifugeuse est renvoyée au mélangeur appartenant au même étage.

14. Procédé selon l'une quelconque des revendications 1 à 13, dans lequel un additif pour la précipitation d'ions sulfate est ajouté dans le premier étage de l'ensemble à étages multiples.
